(19) Europäisches Patentamt / European Patent Office / Office européen des brevets

(11) **EP 4 456 491 A1**

(12) **EUROPEAN PATENT APPLICATION**
published in accordance with Art. 153(4) EPC

(43) Date of publication:
**30.10.2024 Bulletin 2024/44**

(21) Application number: **21968693.8**

(22) Date of filing: **24.12.2021**

(51) International Patent Classification (IPC):
**H04L 27/26** (2006.01)     **G01S 11/02** (2010.01)

(52) Cooperative Patent Classification (CPC):
**G01S 11/02; H04L 27/26**

(86) International application number:
**PCT/CN2021/141329**

(87) International publication number:
**WO 2023/115564 (29.06.2023 Gazette 2023/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **ZHANG, Zhenyu
Beijing 100085 (CN)**
• **ZHAO, Qun
Beijing 100085 (CN)**

• **WU, Yumin
Beijing 100085 (CN)**
• **CHI, Liangang
Beijing 100085 (CN)**
• **HU, Su
Beijing 100085 (CN)**
• **HUANG, Yixuan
Beijing 100085 (CN)**
• **YE, Qibin
Beijing 100085 (CN)**
• **HU, Zelin
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **SUBCARRIER DETERMINING METHOD AND APPARATUS, DEVICE, AND STORAGE MEDIUM**

(57)    The present application relates to the field of mobile communications, and discloses a subcarrier determining method and apparatus, a device, and a storage medium. The method comprises: a target device determines a plurality of subcarriers corresponding to each transmission device in at least two transmission devices at a same time domain position, an interval between two adjacent subcarriers in the plurality of subcarriers being a target interval, and the transmission device being at least one of the following devices: a data receiving device and an echo receiving device. The reliability of a determined subcarriers for data transmissi on is ensured; moreover, an interval is present between adjacent subcarriers, thereby preventing interference between subcarriers and ensuring the accuracy of determining parameters of the data receiving device on the basis of transmitted data.

the data sending device determines a plurality of subcarriers corresponding to each of at least two communication devices at a same time domain location

301

FIG. 3

## Description

### TECHNICAL FIELD

The disclosure relates to a field of mobile communication, more particularly, to a subcarrier determining method, a subcarrier determining apparatus, a device and a storage medium.

### BACKGROUND

With the rapid development of the mobile communication technology, a distance and speed of an individual communication device can be measured by means of echo processing. For the case of multiple communication devices, it is necessary to consider how to allocate subcarriers to these communication devices at the same time.

### SUMMARY

Embodiments of the disclosure provide a subcarrier determining method, a subcarrier determining apparatus, a device and a storage medium. An interval between adjacent subcarriers is a target interval, to ensure a reliability of determined subcarriers used for data transmission. The technical solutions are provided as follows.

According to an aspect of embodiments of the disclosure, a subcarrier determining method, performed by a target device, is provided. The method includes:

determining a plurality of subcarriers corresponding to each of at least two communication devices at a same time domain location;
in which an interval between two adjacent subcarriers in the plurality of subcarriers is a target interval, and the communication device is at least one of a data receiving device or an echo receiving device.

According to an aspect of embodiments of the disclosure, a subcarrier determining apparatus is provided. The apparatus includes:

a determining module, configured to determine a plurality of subcarriers corresponding to each of at least two communication devices at a same time domain location;
in which an interval between two adjacent subcarriers in the plurality of subcarriers is a target interval, and the communication device is at least one of a data receiving device or an echo receiving device.

According to an aspect of embodiments of the disclosure, a target device is provided. The target device includes: a processor, a transceiver coupled to the processor, and a memory for storing instructions executable by the processor. The processor is configured to load and execute the instructions to implement the subcarrier determining method of the above aspect.

According to an aspect of embodiments of the disclosure, a computer readable storage medium having executable program codes stored thereon is provided. When the executable program codes are loaded and executed by a processor, the subcarrier determining method of the above aspect is implemented.

According to an aspect of embodiments of the disclosure, a chip is provided. The chip includes a programmable logic circuit and/or program instructions. When the chip is executed on the target device, the subcarrier determining method of the above aspect is implemented.

According to an aspect of embodiments of the disclosure, a computer program product is provided. When the computer program product is executed by a processor of a target device, the subcarrier determining method of the above aspect is implemented.

Embodiments of the disclosure provide a subcarrier determining method in which, the interval between adjacent subcarriers of the plurality of subcarriers determined at the same time domain location is the target interval, ensuring the reliability of subcarriers determined to be used for data transmission. There is the interval between adjacent subcarriers, preventing interference between the subcarriers, and ensuring the accuracy in determining parameters of the data receiving device based on the transmitted data.

### BRIEF DESCRIPTION OF THE DRAWINGS

In order to more clearly illustrate the technical solutions in embodiments of the disclosure, the accompanying drawings to be used in the description of the embodiments will be briefly introduced below. Obviously, the accompanying drawings in the following description are only some embodiments of the disclosure, and other accompanying drawings can be obtained according to these drawings by those skilled in the art without inventive work.

FIG. 1 illustrates a block diagram of a communication system provided by an embodiment of the disclosure.

FIG. 2 illustrates a schematic diagram of signal processing provided by an embodiment of the disclosure.

FIG. 3 illustrates a flowchart of a subcarrier determining method provided by an embodiment of the disclosure.

FIG. 4 illustrates a flowchart of a subcarrier determining method provided by an embodiment of the disclosure.

FIG. 5 illustrates a flowchart of a subcarrier determining method provided by an embodiment of the disclosure.

FIG. 6 illustrates a flowchart of a subcarrier determining method provided by an embodiment of the disclosure.

FIG. 7 illustrates a flowchart of a subcarrier determining method provided by an embodiment of the disclosure.

FIG. 8 illustrates a flowchart of a subcarrier determining method provided by an embodiment of the disclosure.

FIG. 9 illustrates a schematic diagram of a measurement of a distance and a speed provided by an embodiment of the disclosure.

FIG. 10 illustrates a schematic diagram of a measurement of a distance and a speed measurement provided by an embodiment of the disclosure.

FIG. 11 illustrates a block diagram of a subcarrier determining apparatus provided by an embodiment of the disclosure.

FIG. 12 illustrates a block diagram of a subcarrier determining apparatus provided by an embodiment of the disclosure.

FIG. 13 illustrates a schematic structure of a communication device provided by an embodiment of the disclosure.

## DETAILED DESCRIPTION

In order to make the purpose, technical solutions and advantages of the disclosure more clear, embodiments of the disclosure will be described in further detail in combination with the accompanying drawings.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

An application scenario of the disclosure is described below.

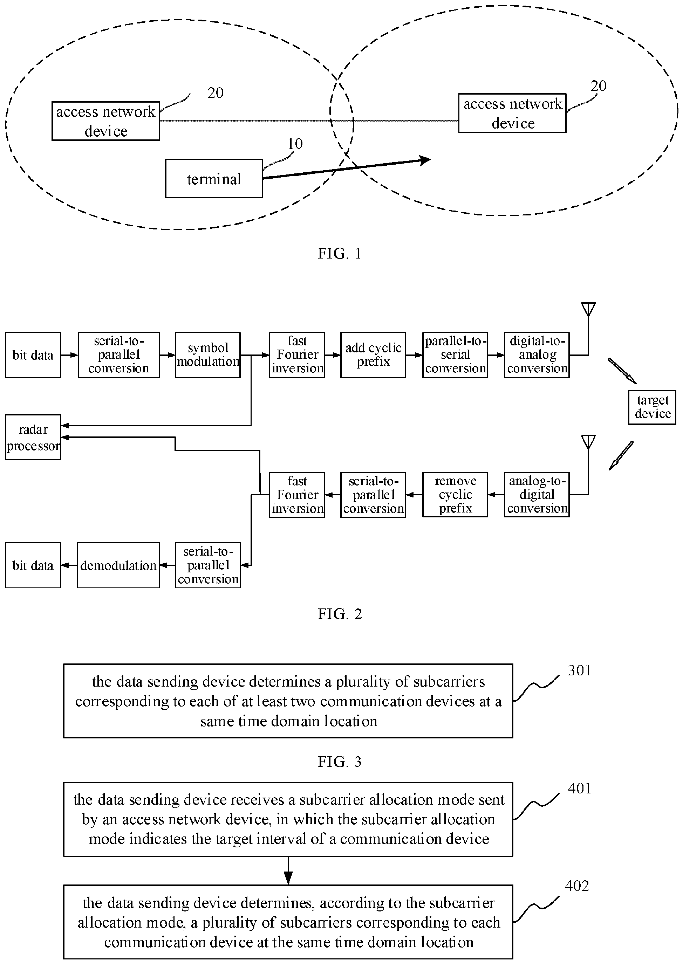

FIG. 1 illustrates a block diagram of a communication system provided by an embodiment of the disclosure. The communication system includes: a terminal 10 and a network device 20.

Generally, there are multiple terminals 10, and one or more terminals 10 may be distributed within a cell managed by each network device 20. The terminal 10 may include various handheld devices with a wireless communication function, vehicle-mounted devices, wearable devices, computing devices or other processing devices connected to a wireless modem, as well as various forms of user equipments (UEs), mobile stations (MSs), etc. For the convenience of description, in embodiments of the disclosure, the above-mentioned devices are collectively referred to as terminals.

The access network device 20 is a device deployed in an access network to provide wireless communication functions for the terminal 10. The access network device 20 may include various forms of macro base stations, micro base stations, relay stations, access points, etc. In systems using different wireless access technologies, the names of devices with the capabilities of the network device may be different. For example, in a 5G new radio (NR) system, it is called a gNB (which is short for gnodeB). As communication technology evolves, the name "access network device" may change. For the convenience of description, in embodiments of the disclosure, the above-mentioned devices that provide wireless communication functions for the terminal 10 are collectively referred to as an access network device. A connection may be established between the access network device 20 and the terminal 10 via an air interface, to realize communication between the two, such as interaction of signaling and data. There may be multiple access network devices 20, and two adjacent access network devices 20 may communicate with each other in a wired or wireless manner. The terminal 10 can switch between different access network devices 20, i.e., and establishing connections with different access network devices 20.

The "5G NR system" in embodiments of the disclosure may also be referred to as a 5G system or an NR system, which is understandable by those skilled in the art. The technical solutions described in embodiments of the disclosure can be applied to the 5G NR system or other future evolved systems of the 5G NR system.

With the development of the mobile communication technology, integrated sensing and communication technology has been proposed, which is implemented by a communication system and a radar system. The disclosure can realize sensing and detection through the integrated sensing and communication technology to obtain a moving speed and/or a distance of a data receiving end. The integrated sensing and communication technology includes a data sending device, a data receiving device and an echo receiving device. Before the data sending device, the data receiving device and the echo receiving device perform interaction, multiple subcarriers corresponding to each data receiving device and echo receiving device at the same time domain location can be determined. For the convenience of description, in the disclosure, devices for determining the subcarriers are collectively described as a target device, and the data receiving device and the echo receiving device are collectively described as a communication device.

In embodiments of the disclosure, after the data sending device, the data receiving device and the echo receiving device determine the subcarriers, data can be transmitted based on the subcarriers. The data sending device sends a signal, and the echo receiving device can receive information sent by the data sending device. The data receiving device not only receives the signal, but also reflects the signal. The echo receiving device can receive the signal reflected by the data receiving device, and it can also receive the signal sent by the data sending device, and then determine a moving speed and/or a distance of the data receiving device according to the signal sent by the data sending device and the received signal reflected by the data receiving device.

For example, as illustrated in FIG. 2, before sending bit data, a communication radar integrated system architecture performs serial-to-parallel conversion and symbol modulation on the bit data, and sends the modulated signal to a radar processor. The radar processor performs fast Fourier inversion on the modulated signal, adds a cyclic prefix, performs the parallel-to-serial conversion, and performs a conversion from a digital signal to an analog signal, and the converted signal is sent to a moving target device. The target device reflects the converted signal, a receiving device performs a conversion from an analog signal to a digital signal, removes the cyclic prefix from the converted signal, performs serial-to-parallel conversion, and then performs fast Fourier transform. The receiving device may also perform parallel-to-serial conversion on the converted signal, and performs demodulation to obtain the bit data. The radar processor may determine the moving speed and/or distance of the target device according to the two received signals.

In some embodiments, the terminal and the access network device involved above may be the data sending device and the data receiving device in the sensing and communication integrated technology, and the radar processor may be the echo receiving device. That is, the data sending device sends the bit data, and both the radar processor and the data receiving device receive the signal the data obtained by processing the bit data by the sending device. The data receiving device may also reflect the signal sent by the data sending device, and the radar processor and the data sending device can also receive the signal reflected by the data receiving device.

It should be noted that the data sending device can send data to multiple data receiving devices, and the data receiving devices receive the data sent by the data sending device on different subcarriers. Therefore, each of the data sending device, the data receiving device, and the echo receiving device, may determine the subcarrier of each data receiving device, so that the data sent by the data sending device can be received based on the subcarrier of each data receiving device.

The signal processing of a communication-radar integrated system in the disclosure is illustrated below. Based on orthogonal frequency division multiplexing (OFDM), after the data sending device in the communication-radar integrated system scatters the signal and reflects the object, the data receiving device transmits the received signal to a communication processing end and a radar processing end, respectively. The OFDM time domain transmission signal is expressed as

$$x_{OFDM}(t) = \sum_{\mu=0}^{N_{frame}-1} \sum_{n=0}^{N_c-1} S_{Tx}(\mu,n) \exp(j2\pi f_n t) rect\left[(t-\mu T_{OFDM})/T_{OFDM}\right]$$

where $S_{Tx}(\square$, represents a OFDM frequency domain symbol, i.e., a Fourier transform of $s(t)$; $N_{frame}$ represents a total number of symbols of an OFDM signal frame; $N_c$ represents a number of subcarriers; $\mu = 0,... N_{frame}$ -1 represent OFDM symbol indexes; n = 0,... , represent subcarrier indexes; $f_n$ represents a corresponding subcarrier frequency; $T_{OFDM} = T + T_{CP}$ represents an OFDM symbol period; $T$ represents an OFDM basic symbol period; $T_{CP}$ represents a cyclic prefix time; and $rect(\square$, represents a rectangular window function.

The communication-radar integrated system may perform communication and sensing detection of the target device in the environment, but the received signal shows a Doppler frequency shift, which is expressed as:

$$f_{D,radar} = 2v_{rel}\big/\lambda = 2v_{rel}f_c\big/c$$

where A a wavelength; $f_c$ represents a carrier frequency; c represents a light speed, and $\lambda = c/f_c$.

When the distance of the OFDM signal is $R$, and the Doppler frequency shift $f_d$ caused by the associated motion is object reflection, the received signal is represented as:

$$y_{OFDM}(t) = \sum_{\mu=0}^{N_{frame}-1}\sum_{n=0}^{N_c-1} S_{Tx}(\mu,n)\exp\left[j2\pi f_n\left(t-\frac{2R}{c}\right)\right]\exp\left(j2\pi f_D t\right)rect\left[\left(t-\mu T_{OFDM}-\frac{2R}{c}\right)\Big/T_{OFDM}\right].$$

The received modulated symbol is obtained from the transmitted signal and the Doppler frequency shift, which is represented by:

$$S_{Rx}(\mu,n) = S_{Tx}(\mu,n)\exp\left(-j2\pi n\Delta f\frac{2R}{c}\right)\exp\left(j2\pi\mu T_{OFDM}\frac{2v_{rel}f_c}{c}\right)$$

For an object at a distance of $R$ from the communication-radar integrated system, a linear phase shift is generated between subcarrier data of all the reflected OFDM symbols. If the object is stationary, for the same OFDM symbol, i.e., at the same time point, the distance information $R$ is included in the linear phase shift of the modulated symbols on the frequency axis. Doppler processing is similar to the distance processing. A Doppler frequency of an echo signal reflected by a target device moving at a relative speed $v_{rel}$ is twice a Doppler frequency of a communication signal with the same relative speed. For the same OFDM subcarrier, i.e., the same frequency point, the relative speed information $v_{rel}$ is included in the linear phase shift between the modulation symbols on the time axis.

FIG. 3 illustrates a flowchart of a subcarrier determining method provided by an embodiment of the disclosure, which can be performed by a target device shown in FIG. 2. The method of the disclosure is described below by taking a data sending device as an example of the target device. The method includes at least part of the following contents.

At step 301, the data sending device determines a plurality of subcarriers corresponding to each of at least two communication devices at a same time domain location.

The subcarriers are used for data transmission. An interval between adjacent subcarriers in the plurality of subcarriers is a target interval. The communication device is at least one of a data receiving device or an echo receiving device. In embodiments of the disclosure, "the plurality of" refers to any number greater than one, i.e., "the plurality of" refers to a number greater than or equal to 2.

In embodiments of the disclosure, the data sending device may send data to at least two communication devices to facilitate measuring a moving speed and/or a distance of each data receiving device based on the transmitted data. For each communication device, the communication device corresponds to a plurality of subcarriers at the same time domain location, and thus the data sending device may determine a plurality of subcarriers corresponding to each communication device at the same time domain location. The interval between adjacent subcarriers in the plurality of subcarriers is the target interval, and the data sending device may perform data transmission based on the determined plurality of subcarriers subsequently.

It is noted that embodiments of the disclosure are illustrated only by taking the target device being the data sending device as an example. In another embodiment, the target device may be a data receiving device. That is, the data receiving device determines a plurality of subcarriers corresponding to each of at least two communication devices at the same time domain location.

In embodiments of the disclosure, the communication device corresponds to a plurality of subcarriers at the same time domain location, the data sending device transmits data according to the plurality of subcarriers, and the data receiving device may also determine a plurality of corresponding subcarriers at the same time domain location. The interval between adjacent subcarriers in the plurality of subcarriers is the target interval.

In another embodiment, the target device may be an echo receiving device. That is, the echo receiving device determines a plurality of subcarriers corresponding to each of at least two communication devices at the same time domain location.

In embodiments of the disclosure, the echo receiving device corresponds to a plurality of subcarriers at the same time domain location, and the data sending device transmits data based on the plurality of subcarriers. Therefore, in order to be able to receive data sent by the data sending device and data reflected by the data receiving device, the echo receiving device may determine the plurality of corresponding subcarriers at the same time domain location. The interval between adjacent subcarriers in the plurality of subcarriers is the target interval.

Embodiments of the disclosure provide a subcarrier determining method, in which the interval between adjacent subcarriers in the plurality of subcarriers determined at the same time domain location is the target interval, to ensure the reliability of the determined subcarriers used for data transmission. In addition, there is an interval between adjacent subcarriers, preventing interference between subcarriers, and ensuring the accuracy in determining parameters of the data receiving device based on the transmitted data.

The embodiment of FIG. 3 illustrates the determined subcarriers. For how to determine the subcarriers, a distribution condition of subcarriers may be determined based on a subcarrier allocation mode, the explanations are provided below in which the data sending device is taken as an example of the target device.

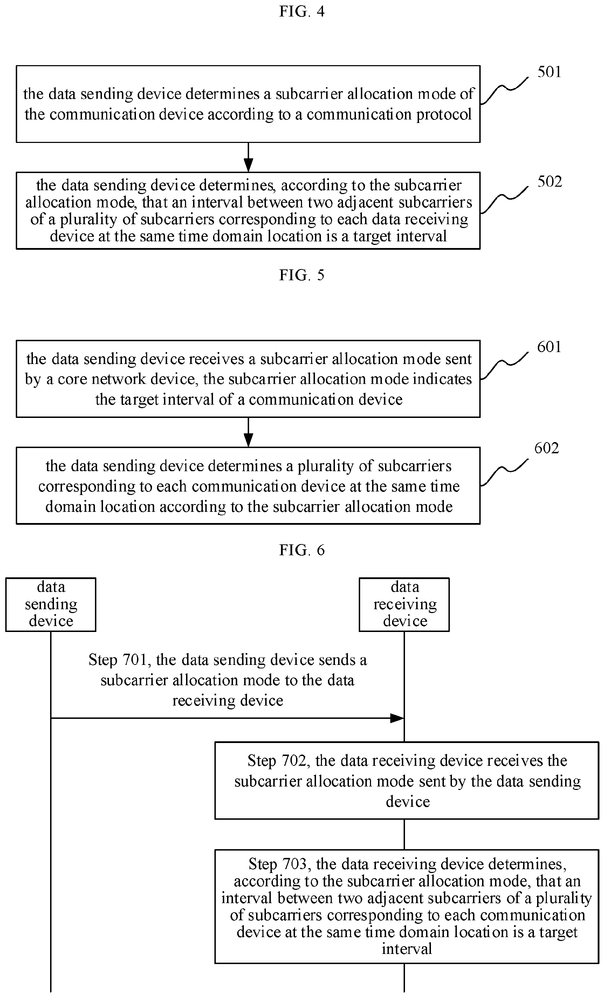

**A first method** is to determine the subcarriers according to a subcarrier allocation mode sent by an access network device. For example, as illustrated in FIG. 4, the method includes the following steps.

At step 401, the data sending device receives a subcarrier allocation mode sent by an access network device, in which the subcarrier allocation mode indicates a target interval of a communication device.

In embodiments of the disclosure, the access network device may send the subcarrier allocation mode to each device. The subcarrier allocation mode indicates that the subcarriers corresponding to the communication device are distributed, at the same time domain location, according to the target interval. The data sending device receives the subcarrier allocation mode sent by the access network device, and an allocation condition of the subcarriers is indicated by the subcarrier allocation mode.

In embodiments of the disclosure, subcarriers distributed at the same time domain location according to the target interval refers to that subcarriers equally spaced at the same time domain location, i.e., a distance between two adjacent subcarriers are the target interval.

In some embodiments, the access network device sends configuration information that includes the subcarrier allocation mode.

In some embodiments, the access network device may send a plurality of subcarrier allocation modes to the data sending device, and the data sending device may receive the plurality of subcarrier allocation modes.

At step 402, the data sending device determines, according to the subcarrier allocation mode, a plurality of subcarriers corresponding to each communication device at the same time domain location. The plurality of subcarriers are equally spaced from each other at an interval, which is the target interval.

In embodiments of the disclosure, after the data sending device receives the subcarrier allocation mode sent by the access network device, it may determine, according to the subcarrier allocation mode, that the plurality of subcarriers corresponding to each communication device at the same time domain location are equally spaced according to the target interval.

In some embodiments, the subcarrier allocation mode is carried in a Downlink Control Information (DCI) signaling, a Medium Access Control-Control Element (MAC-CE) signaling, or a Radio Resource Control (RRC) signaling.

In some embodiments, the access network device indicates the subcarrier allocation mode via a semi-static signaling. In embodiments of the disclosure, the access network device determines the subcarrier allocation mode indicated by a signaling by sending the signaling, which may be an RRC signaling.

In some embodiments, the access network device indicates the subcarrier allocation mode via dynamic information. In embodiments of the disclosure, the access network device indicates the subcarrier allocation mode via a MAC-CE signaling or a DCI signaling.

It is noted that embodiments of the disclosure are illustrated with an example in which the access network device indicates the subcarrier allocation mode. In another embodiment, after receiving the plurality of subcarrier allocation modes sent by the access network device, the data sending device determines a subcarrier allocation mode to be used from the plurality of subcarrier allocation modes, and then determines the distribution condition of respective data receiving devices according to the determined subcarrier allocation mode to be used.

In the method provided by embodiments of the disclosure, the data sending device can determine the distribution condition of subcarriers of each communication device according to the subcarrier allocation mode sent by the access network device, to ensure the reliability of subcarriers for data transmission determined by the data sending device. Moreover, there is the interval between adjacent subcarriers, preventing interference between subcarriers and ensuring accuracy in determining parameters of the data receiving device based on the transmitted data.

**A second method** is distributing the subcarriers at the same time domain location according to the target interval is agreed by a communication protocol, and the data sending device determines the subcarriers according to the communication protocol. For example, as illustrated in FIG. 5, the method includes the following steps.

At step 501, the data sending device determines a subcarrier allocation mode of the communication device according to a communication protocol.

In embodiments of the disclosure, the subcarrier allocation mode indicates that the subcarriers corresponding to the communication device are distributed at the same time domain location according to a target interval, and the data sending device receives the subcarrier allocation mode sent by an access network device, and the subcarrier allocation mode indicates the distribution condition of the subcarriers.

At step 502, the data sending device determines an interval between two adjacent subcarriers of a plurality of subcarriers corresponding to each data receiving device at the same time domain location as a target interval according to the subcarrier allocation mode.

The distribution condition of the plurality of subcarriers corresponding to each communication device at the same time domain location is specified by the communication protocol, so that the data sending device can directly determine the subcarrier allocation mode according to the communication protocol, and determine that the plurality of subcarriers corresponding to each communication device at the same time domain location are distributed according to the target interval.

In some embodiments, the communication protocol specifies a start location of each of the plurality of subcarriers corresponding to each communication device at the same time domain location and the target interval, so that the plurality of subcarriers corresponding to each communication device are determined according to the start location of each subcarrier corresponding to each communication device and the target interval.

Embodiments of the disclosure provides a method in which the data sending device can determine the distribution condition of subcarriers of each communication device according to the subcarrier allocation mode specified in the communication protocol, ensuring the reliability of subcarriers determined by the data sending device for data transmission. Moreover, there is the interval between adjacent subcarriers, preventing interference between subcarriers and ensuring accuracy in determining parameters of the data receiving device based on the transmitted data.

**A third method** is to determine subcarriers according to a subcarrier allocation mode sent by a core network device. For example, as illustrated in FIG. 6, the method includes the following steps.

At step 601, the data sending device receives a subcarrier allocation mode sent by a core network device. The subcarrier allocation mode indicates a target interval of a communication device.

In embodiments of the disclosure, if the data sending device is directly connected to the core network device, the core network device may directly send the subcarrier allocation mode to the data sending device. If the data sending device is not directly connected to the core network device, the core network device may send the subcarrier allocation mode to the data sending device through any other appropriate device. In embodiments of the disclosure, all these methods are collectively referred to as that the data sending device receives the subcarrier allocation mode sent by the core network device.

In embodiments of the disclosure, the core network device may directly or indirectly (via other devices) send the subcarrier allocation mode to each device. The subcarrier allocation mode indicates that the subcarriers are distributed according to the target interval at the same time domain location. The data sending device receives the subcarrier allocation mode sent by the core network device, and the distribution condition of subcarriers is indicated via the subcarrier allocation mode.

In some embodiments, the core network device sends configuration information, and the configuration information includes the subcarrier allocation mode.

In some embodiments, the core network device can send multiple subcarrier allocation modes to the data sending device, and the data sending device receives the multiple subcarrier allocation modes.

At step 602, the data sending device determines a plurality of subcarriers corresponding to each communication device at the same time domain location according to the subcarrier allocation mode. The plurality of subcarriers are equally spaced from each other at an interval, and the interval is the target interval.

In embodiments of the disclosure, after receiving the subcarrier allocation mode sent by the core network device, the data sending device may determine, according to the subcarrier allocation mode, that the plurality of subcarriers corresponding to each communication device at the same time domain location are distributed according to the target interval.

In some embodiments, the subcarrier allocation mode is carried in a DCI signaling, a MAC-CE signaling, or an RRC signaling.

In some embodiments, the core network device indicates the subcarrier allocation mode via a semi-static signaling. In embodiments of the disclosure, the core network device indicates the subcarrier allocation mode indicated by a signaling by sending the signaling, which may be an RRC signaling.

In some embodiments, the core network device indicates the subcarrier allocation mode via dynamic information. In embodiments of the disclosure, the access network device indicates the subcarrier allocation mode via a MAC-CE signaling or a DCI signaling.

In the method provided by embodiments of the disclosure, the data sending device can determine the distribution condition of subcarriers of each communication device according to the subcarrier allocation mode sent by the core network device, ensuring the reliability of subcarriers determined by the data sending device for data transmission. Moreover, there is the interval between adjacent subcarriers, preventing interference between subcarriers and ensuring accuracy in determining parameters of the data receiving device based on the transmitted data.

It should be noted that embodiments of the disclosure are illustrated by taking the target device being a data sending device as an example. In another embodiment, the target device may also be a data receiving device, and a manner in which the data receiving device determines the subcarriers is similar to the manner in which the data sending device determines the subcarriers as described above, which will not be repeated herein. In another embodiment, the target device may also be an echo receiving device, and a manner in which the echo receiving device determines the subcarriers is similar to the manner in which the data sending device determines the subcarriers as described above, which will not be described herein. That is, steps 401-402 in the above-described first method may be performed by the data receiving device or the echo receiving device. Steps 501-502 in the above-described second method can be performed by the data receiving device or the echo receiving device. Steps 601-602 in the above third method can be performed by the data receiving device or the echo receiving device.

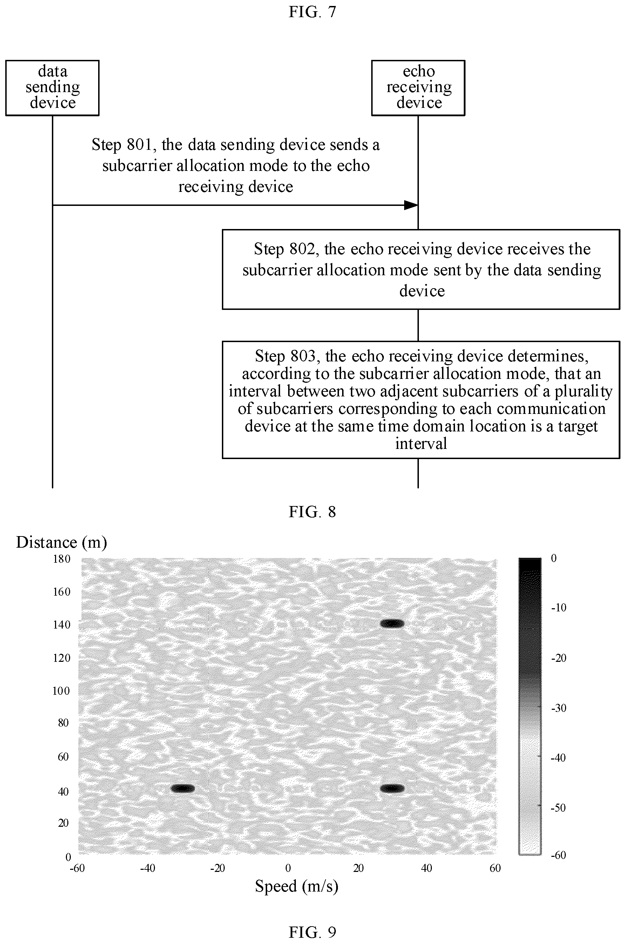

On the basis of the embodiment shown in FIG. 3, a data receiving device may determine a distribution condition of subcarriers according to a subcarrier allocation mode sent by a data sending device. As illustrated in FIG. 7, the method includes the following steps.

At step 701, the data sending device sends a subcarrier allocation mode to the data receiving device.

At step 702, the data receiving device receives the subcarrier allocation mode sent by the data sending device.

At step 703, the data receiving device determines that an interval between two adjacent subcarriers of a plurality of subcarriers corresponding to each communication device at the same time domain location is a target interval according to the subcarrier allocation mode.

In embodiments of the disclosure, after the data sending device determines the subcarrier allocation mode, it may send the subcarrier allocation mode to the data receiving device. The data receiving device may determine the distribution condition of the plurality of subcarriers at the same time domain location according to the subcarrier allocation mode.

In a possible implementation,
the data sending device sends the subcarrier allocation mode to the data receiving device, in which the subcarrier allocation mode is used to instruct the data receiving device to determine that the interval between two adjacent subcarriers of the plurality of subcarriers corresponding to each communication device at the same time domain location is the target interval according to the subcarrier allocation mode.

In another possible implementation,
the data receiving device receives the subcarrier allocation mode sent by the data sending device to determine that the interval between two adjacent subcarriers of the plurality of subcarriers corresponding to each communication device at the same time domain location is the target interval according to the subcarrier allocation mode.

In the method provided by embodiments of the disclosure, the data receiving device can determine the distribution condition of subcarriers according to the subcarrier allocation mode sent by the data sending device, and perform data transmission based on the determined subcarriers, to ensure the reliability of subcarriers determined by the data receiving device for data transmission. Moreover, there is the interval between adjacent subcarriers, to prevent interference between subcarriers to ensure accuracy in determining parameters of the data receiving device based on the transmitted data.

It should be noted that embodiments of the disclosure are illustrated by taking an example in which the data sending device sends the subcarrier allocation mode to the data receiving device.

On the basis of embodiments shown in FIG. 3, an echo receiving device may determine a distribution condition of subcarriers according to a subcarrier allocation mode sent by a data sending device. As illustrated in FIG. 8, the method further includes the following steps.

At step 801, the data sending device sends a subcarrier allocation mode to the echo receiving device.

At step 802, the echo receiving device receives the subcarrier allocation mode sent by the data sending device.

At step 803, the echo receiving device determines that an interval between two adjacent subcarriers of a plurality of subcarriers corresponding to each communication device at the same time domain location is a target interval according to the subcarrier allocation mode.

In embodiments of the disclosure, after the data sending device determines the subcarrier allocation mode, it may send the subcarrier allocation mode to the echo receiving device, and the echo receiving device may determine the distribution condition of subcarriers corresponding to the same time domain location according to the subcarrier allocation mode.

In a possible implementation,
the data sending device sends the subcarrier allocation mode to the echo receiving device, in which the subcarrier allocation mode is used to instruct the echo receiving device to determine that the interval between two adjacent subcarriers of the plurality of subcarriers corresponding to each communication device at the same time domain location is the target interval according to the subcarrier allocation mode.

In another possible implementation,
the echo receiving device receives the subcarrier allocation mode sent by the data sending device to determine that the interval between two adjacent subcarriers of the plurality of subcarriers corresponding to each communication device at the same time domain location is the target interval according to the subcarrier allocation mode.

In the method provided by embodiments of the disclosure, the echo receiving device can determine the distribution condition of subcarriers according to the subcarrier allocation mode sent by the data sending device, and perform data transmission based on the determined subcarriers, to ensure the reliability of subcarriers determined by the echo receiving device for data transmission. Moreover, there is the interval between adjacent subcarriers, to prevent interference between subcarriers and to ensure accuracy in determining parameters of the echo receiving device based on the transmitted data.

It is noted that embodiments of FIGS. 7 and 8 above are illustrated by taking examples in which the data sending device sends the subcarrier allocation mode to the data receiving device and the echo receiving device. In another embodiment, the data receiving device may determine the subcarrier allocation mode, and then send it to the data sending device and the echo receiving device. The processes in which the data receiving device sends the subcarrier allocation mode to the data sending device and the echo receiving device are similar to the processes of embodiments shown in the above-described FIGS. 7 and 8, which will not be further described herein.

In another embodiment, the echo receiving device may determine the subcarrier allocation mode, and then sends it to the data sending device and the data receiving device. The processes in which the echo receiving device sends the subcarrier allocation mode to the data sending device and the data receiving device are similar to the processes of embodiments illustrated in the above FIGS. 7 and 8, which will not be further described herein.

On the basis of embodiments shown in FIG. 3, the target interval is determined according to a number of data receiving devices. That is, different numbers of data receiving devices correspond to different target intervals.

In some embodiments, the target interval is a difference between a number of data receiving devices and 1.

In embodiments of the disclosure, at least two data receiving devices may occupy subcarriers at the same time domain location, a plurality of subcarriers at the same time domain location are allocated to the data receiving devices, so that a distance between adjacent subcarriers of the plurality of subcarriers allocated to the data receiving devices is the target interval.

The target interval is a difference between a number of data receiving devices and 1.

For any data receiving device, the subcarriers occupied by the data receiving devices in the frequency domain resources have equal frequency intervals, i.e., the frequency interval between adjacent frequency-domain signals is the target interval. For example, the data receiving device occupies $N_u$ subcarriers in a total of $N$ subcarriers in the frequency domain resources, and the $N_u$ subcarriers constitute a set $N$, and $N(s)$ represents the $s^{th}$ element in the set. For example, a center frequency of a subcarrier occupied by the data receiving device is $f(i)$, in which $i = N(1),N(2)...,N(1), N(N_u)$. When a subcarrier equal interval allocation solution is adopted, it is determined that $f(i+1)- f(i) = \Delta f$, where $\Delta f$ is the target interval, and $\Delta f$ is the difference between the number of data receiving devices and 1.

It is noted that the above embodiments only describe the interval between adjacent subcarriers using one data receiving device. In another embodiment, for at least two data receiving devices, the interval between two adjacent subcarriers corresponding to one data receiving device includes subcarriers corresponding to all other data receiving devices, that is, the target interval is a total number of subcarriers corresponding to all other data receiving devices.

For example, one time domain location includes 1024 subcarriers and there are 4 data receiving devices, the first data receiving device corresponds to the 4n+1st subcarrier of the 1024 subcarriers at each time domain location, n=0, 1, 2...255. The second data receiving device corresponds to the 4n+2nd subcarrier of the 1024 subcarriers at each time domain location, n=0, 1, 2...255. The third data receiving device corresponds to the 4n+3rd subcarrier of the 1024 subcarriers at each time domain location, n=0, 1, 2...255. The fourth data receiving device corresponds to the 4n+4th subcarrier of the 1024 subcarriers at each time domain location, n=0, 1, 2...255.

For the first data receiving device, the target interval includes three subcarriers corresponding to the second data receiving device, the third data receiving device and the fourth data receiving device respectively. For example, for the first subcarrier and the fifth subcarrier of the first data receiving device, an interval between the first subcarrier and the fifth subcarrier is the second subcarrier of the second data receiving device, the third subcarrier of the third data receiving device and the fourth subcarrier of the fourth data receiving device. For example, for the second subcarrier and the sixth subcarrier of the second data receiving device, an interval between the second subcarrier and the sixth subcarrier is the third subcarrier of the third data receiving device, the fourth subcarrier of the fourth data receiving device and the fifth subcarrier of the first data receiving device, and so on. Two adjacent subcarriers of each data receiving device are separated by respective subcarriers of all the other data receiving devices.

In this case, as illustrated in FIG. 9, for a first terminal, distances and speeds of other terminals are distances and speeds corresponding to the black dots shown in the figure.

For example, one time domain location includes 1024 subcarriers and there are 4 data receiving devices. The first data receiving device corresponds to the 4n+$i$ subcarrier of the 1024 subcarriers at each time domain location, n=0, 1, 2...255. The second data receiving device corresponds to the 4n+$j$ subcarrier of the 1024 subcarriers, n=0, 1, 2...255. The third data receiving device corresponds to the 4n+k subcarrier of the 1024 subcarriers at each time domain location, n=0, 1, 2...255. The fourth data receiving device corresponds to the 4n+$l$ subcarrier of the 1024 subcarriers at each time domain location, n=0, 1, 2...255. Moreover, $i, j, k, l \in \{1,2,3,4\}$ and they have different values. For each time domain location, $i, j, k, l$ are determined randomly from 1, 2, 3 and 4 and have different values.

For the first data receiving device, the target interval includes three subcarriers corresponding to the second data receiving device, the third data receiving device and the fourth data receiving device, respectively. For example, at a time domain location, where $i=2$, $j=1$, $k=4$, and $l=3$, taking the second subcarrier and the sixth subcarrier of the first data receiving device as an example, an interval between the second subcarrier and the sixth subcarrier includes the third subcarrier of the fourth data receiving device, the fourth subcarrier of the third data receiving device, and the fifth subcarrier of the second data receiving device. Taking the third subcarrier and the seventh subcarrier of the fourth data receiving device as an example, an interval between the third subcarrier and the seventh subcarrier includes the fourth subcarrier of the third data receiving device, the fifth subcarrier of the second data receiving device, and the sixth subcarrier of the first data receiving device, and so on. Two adjacent subcarriers of each data receiving device are separated by respective subcarriers of all the other data receiving devices.

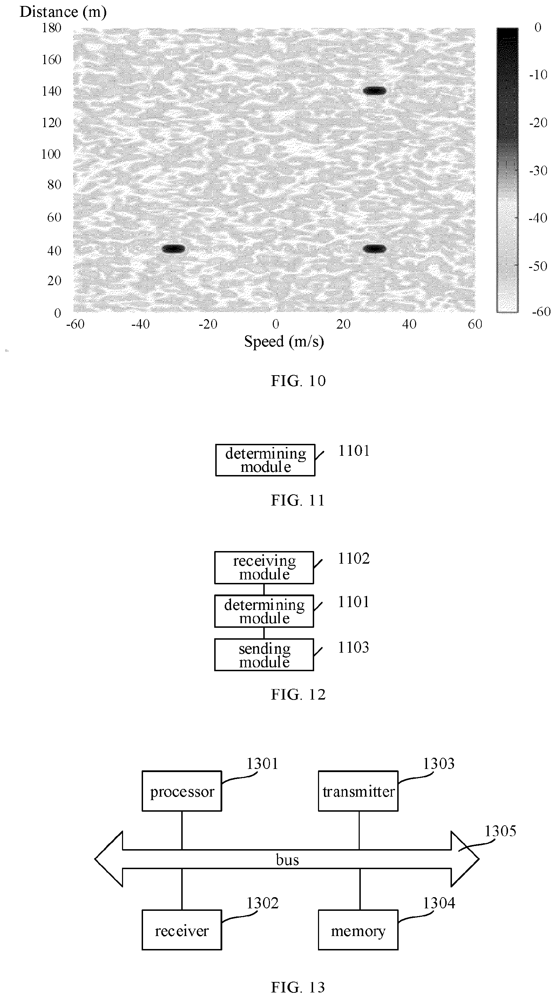

In this case, as illustrated in FIG. 10, for the first terminal, the distances and speeds of the other terminals are the distances and speeds corresponding to the black dots in the figure.

On the basis of embodiments shown in FIG. 3, the data receiving device is a terminal, the echo receiving device is an access network device or a terminal, and the data sending device is an access network device or a terminal.

In some embodiments, the data sending device and the echo receiving device may be the same device.

For example, both the data sending device and the echo receiving device are access network devices.

For another example, both the data sending device and the echo receiving device are terminals, and the terminals of the data sending device and the echo receiving device are different from the terminal of the data receiving device.

It should be noted that, in the case where the data sending device and the echo receiving device are the same device, the integrated sensing and communication system is an active radar system. The data sending device sends bit data to the data receiving device, and the data receiving device acts as a receiver to complete the communication function. The bit data sent by the data sending device strikes on a data receiving end, and an echo signal generated on the data receiving end is sent back to the echo receiving device (i.e., the data sending device), and the echo receiving device detects the speed and distance and other information of the data receiving device through a radar processor to complete the radar function.

In some embodiments, the data sending device and the echo receiving device are different devices.

For example, the data sending device is an access network device 1, the data receiving device is a terminal, and the echo receiving device is an access network device 2 or a group of access network devices.

For another example, the data sending device is a terminal 1, the data receiving device is a terminal 2, and the echo receiving device is a terminal 3 or a group of terminals.

For another example, the data sending device is a terminal 1, the data receiving device is a terminal 2, and the echo receiving device is an access network device or a group of access network devices.

It should be noted that, in the case where the data sending device and the echo receiving device are different devices, the integrated sensing and communication system is a passive radar system, the data sending device and the echo receiving device are not the same device, and there may be a plurality of echo receiving devices. The data sending device sends bit data to the data receiving device, and the data receiving device acts as a receiver to complete the communication function. The bit data sent by data sending device strikes on the data receiving device, and an echo signal generated on the data receiving device is sent back to the echo receiving device, and the echo receiving device detects the speed and distance and other information of the data receiving device through a radar processor to complete the radar function.

It should be noted that the above embodiments may be split into new embodiments or combined with other embodiments to form new embodiments, and the combinations of embodiments are not limited in the disclosure.

FIG. 11 illustrates a block diagram of a subcarrier determining apparatus provided by an embodiment of the disclosure. As illustrated in FIG. 11, the apparatus includes:

a determining module 1101, configured to determine a plurality of subcarriers corresponding to each of at least two communication devices at the same time domain location;
in which an interval between two adjacent subcarriers in the plurality of subcarriers is a target interval, and the communication device is at least one of a data receiving device or an echo receiving device.

In some embodiments, subcarriers of different communication devices do not overlap with each other.

In some embodiments, the apparatus further includes:

a receiving module 1102, configured to receive a subcarrier allocation mode of a communication device sent by an access network device, in which the subcarrier allocation mode indicates the target interval of the communication device; and
the determining module 1101 is configured to determine, according to the subcarrier allocation mode, that an interval between two adjacent subcarriers in the plurality of subcarriers corresponding to each communication device at the same time domain location is the target interval.

In some embodiments, the determining module 1101 is further configured to:

determine a subcarrier allocation mode of a communication device according to a communication protocol, in which the subcarrier allocation mode indicates the target interval of the communication device; and
determine, according to the subcarrier allocation mode, that an interval between two adjacent subcarriers in the plurality of subcarriers corresponding to each communication device at the same time domain location is the target interval.

In some embodiments, the apparatus further includes:

the receiving module 1102, configured to receive a subcarrier allocation mode of a communication device sent by a core network device, in which the subcarrier allocation mode indicates the target interval of the communication device; the determining module 1101 is configured to determine, according to the subcarrier allocation mode, that an interval between two adjacent subcarriers in the plurality of subcarriers corresponding to each communication device at the same time domain location is the target interval.

In some embodiments, the target device is at least one of the following devices:
a data sending device, a data receiving device or an echo receiving device.
In some embodiments, the apparatus further includes:
a sending module 1103, configured to send a subcarrier allocation mode to the communication device, in which the subcarrier allocation mode indicates a target interval of the communication device.
In some embodiments, the sending module 1103 is further configured to:

send the subcarrier allocation mode to the communication device via a DCI signaling;
or,
send the subcarrier allocation mode to the communication device via a MAC-CE signaling;
or,
send the subcarrier allocation mode to the communication device via a RRC signaling.

In some embodiments, the data sending device is an access network device or a terminal.
In some embodiments, the data receiving device is a terminal.
In some embodiments, the echo receiving device is an access network device or a terminal.
In some embodiments, the target interval is a difference between a number of data receiving devices and 1.
It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the apparatus can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.
FIG. 13 is a schematic diagram of a communication device provided by embodiments of the disclosure. The communication device includes: a processor 1301, a receiver 1302, a transmitter 1303, a memory 1304 and a bus 1305.
The processor 1301 includes one or more processing cores, and performs various functional applications as well as information processing by running software programs and modules.
The receiver 1302 and the transmitter 1303 may be realized as a communication component, which may be a communication chip.
The memory 1304 is connected to the processor 1301 via the bus 1305.
The memory 1304 may be used to store at least one program code. The processor 1301 is used to execute the at least one program code to implement various steps in the method embodiments described above.
The communication device may be a terminal or a network device. The memory 1304 may be implemented by any type of volatile or nonvolatile storage device or a combination thereof. The volatile or nonvolatile storage device includes, but is not limited to, a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory, and a programmable ROM (PROM).
In an embodiment, a computer-readable storage medium having executable program codes stored thereon is provided. When the executable program codes are loaded and executed by a processor, the subcarrier determining method executed by the communication device provided by each method embodiment is implemented.

In an embodiment, a chip is provided. The chip includes a programmable logic circuit and/or program instructions. When the chip runs on a terminal or a network device, the subcarrier determining method provided in each method embodiment is implemented.

In an embodiment, a computer program product is provided. When the computer program product is executed by a processor of a terminal or a network device, the subcarrier determining method provided in each method embodiment is implemented.

Those skilled in the art understand that all or some of the steps for realizing the above embodiments may be accomplished by hardware or by a program instructing corresponding hardware. The program may be stored in a computer-readable storage medium, and the storage medium referred to above may be a ROM, a magnetic disk or optical disc.

The foregoing are only optional embodiments of the disclosure and are not intended to limit this disclosure. Any modifications, equivalent substitutions, or improvements made within the spirit and principles of this disclosure shall be included in the scope of protection of this disclosure.


## Claims

1. A subcarrier determining method, performed by a target device, comprising:

   determining a plurality of subcarriers corresponding to each of at least two communication devices at a same time domain location;
   wherein an interval between two adjacent subcarriers in the plurality of subcarriers is a target interval, and the communication device is at least one of a data receiving device or an echo receiving device.

2. The method of claim 1, wherein subcarriers of different communication devices do not overlap with each other.

3. The method of claim 1 or 2, wherein determining the plurality of subcarriers corresponding to each of the at least two communication devices at the same time domain location comprises:

   receiving a subcarrier allocation mode of a communication device sent by an access network device, wherein the subcarrier allocation mode indicates the target interval of the communication device; and
   determining, according to the subcarrier allocation mode, that an interval between two adjacent subcarriers in the plurality of subcarriers corresponding to each communication device at the same time domain location is the target interval.

4. The method of claim 1 or 2, wherein determining the plurality of subcarriers corresponding to each of the at least two communication devices at the same time domain location comprises:

   determining a subcarrier allocation mode of a communication device according to a communication protocol, wherein the subcarrier allocation mode indicates the target interval of the communication device; and
   determining, according to the subcarrier allocation mode, that an interval between two adjacent subcarriers in the plurality of subcarriers corresponding to each communication device at the same time domain location is the target interval.

5. The method of claim 1 or 2, wherein determining the plurality of subcarriers corresponding to each of the at least two communication devices at the same time domain location comprises:

   receiving a subcarrier allocation mode of a communication device sent by a core network device, wherein the subcarrier allocation mode indicates the target interval of the communication device; and
   determining, according to the subcarrier allocation mode, that an interval between two adjacent subcarriers in the plurality of subcarriers corresponding to each communication device at the same time domain location is the target interval.

6. The method of any one of claims 1-5, wherein the target device is at least one of the following devices:
   a data sending device, the data receiving device or the echo receiving device.

7. The method of claim 6, wherein the target device is the data sending device, and the method further comprises: sending a subcarrier allocation mode to the communication device, wherein the subcarrier allocation mode indicates a target interval of the communication device.

8. The method of claim 7, wherein sending the subcarrier allocation mode to the communication device comprises:

sending the subcarrier allocation mode to the communication device via a downlink control information (DCI) signaling;
or,
sending the subcarrier allocation mode to the communication device via a medium access control-control element (MAC-CE) signaling;
or,
sending the subcarrier allocation mode to the communication device via a radio resource control (RRC) signaling.

9. The method of any one of claims 6-9, wherein the data sending device is an access network device or a terminal.

10. The method of any one of claims 6-9, wherein the data receiving device is a terminal.

11. The method of any one of claims 6-9, wherein the echo receiving device is an access network device or a terminal.

12. The method of any one of claims 1-11, wherein the target interval is a difference between a number of data receiving devices and 1.

13. A subcarrier determining apparatus, comprising:

a determining module, configured to determine a plurality of subcarriers corresponding to each of at least two communication devices at a same time domain location;
wherein an interval between two adjacent subcarriers in the plurality of subcarriers is a target interval, and the communication device is at least one of a data receiving device or an echo receiving device.

14. The apparatus of claim 13, wherein subcarriers of different communication devices do not overlap with each other.

15. The apparatus of claim 13 or 14, further comprising:

a receiving module, configured to receive a subcarrier allocation mode of a communication device sent by an access network device, wherein the subcarrier allocation mode indicates the target interval of the communication device;
wherein the determining module is configured to determine, according to the subcarrier allocation mode, that an interval between two adjacent subcarriers in the plurality of subcarriers corresponding to each communication device at the same time domain location is the target interval.

16. The apparatus of claim 13 or 14, wherein the determining module is further configured to:

determine a subcarrier allocation mode of a communication device according to a communication protocol, wherein the subcarrier allocation mode indicates the target interval of the communication device; and
determine, according to the subcarrier allocation mode, that an interval between two adjacent subcarriers in the plurality of subcarriers corresponding to each communication device at the same time domain location is the target interval.

17. The apparatus of claim 13 or 14, further comprising:

a receiving module, configured to receive a subcarrier allocation mode of a communication device sent by a core network device, wherein the subcarrier allocation mode indicates the target interval of the communication device;
wherein the determining module is configured to determine, according to the subcarrier allocation mode, that an interval between two adjacent subcarriers in the plurality of subcarriers corresponding to each communication device at the same time domain location is the target interval.

18. The apparatus of any one of claims 13-17, wherein the target device is at least one of the following devices:

a data sending device, a data receiving device or an echo receiving device.

19. The apparatus of claim 18, further comprising:
a sending module, configured to send a subcarrier allocation mode to the communication device, wherein the subcarrier allocation mode indicates a target interval of the communication device.

20. The apparatus of claim 18, wherein the sending module is further configured to:

send the subcarrier allocation mode to the communication device via a downlink control information (DCI) signaling;
or,
send the subcarrier allocation mode to the communication device via a medium access control-control element (MAC-CE) signaling;
or,
send the subcarrier allocation mode to the communication device via a radio resource control (RRC) signaling.

21. The apparatus of any one of claims 18-20, wherein the data sending device is an access network device or a terminal.

22. The apparatus of any one of claims 18-20, wherein the data receiving device is a terminal.

23. The apparatus of any one of claims 18-20, wherein the echo receiving device is an access network device or a terminal.

24. The apparatus of any one of claims 13-23, wherein the target interval is a difference between a number of data receiving devices and 1.

25. A device, comprising:

a processor; and
a transceiver coupled to the processor;
wherein the processor is configured to load and execute executable instructions to implement the subcarrier determining method of any one of claims 1-12.

26. A computer readable storage medium having executable program codes stored thereon, wherein when the executable program codes are loaded and executed by a processor, the subcarrier determining method of any one of claims 1-12 is implemented.

27. A computer program product, wherein when the computer program product is executed by a processor of a target device, the subcarrier determining method of any one of claims 1-12 is implemented.

FIG. 1

FIG. 2

| the data sending device determines a plurality of subcarriers corresponding to each of at least two communication devices at a same time domain location | 301 |
|---|---|

FIG. 3

| the data sending device receives a subcarrier allocation mode sent by an access network device, in which the subcarrier allocation mode indicates the target interval of a communication device | 401 |
|---|---|

| the data sending device determines, according to the subcarrier allocation mode, a plurality of subcarriers corresponding to each communication device at the same time domain location | 402 |
|---|---|

FIG. 4

the data sending device determines a subcarrier allocation mode of the communication device according to a communication protocol ⟋ 501

the data sending device determines, according to the subcarrier allocation mode, that an interval between two adjacent subcarriers of a plurality of subcarriers corresponding to each data receiving device at the same time domain location is a target interval ⟋ 502

FIG. 5

the data sending device receives a subcarrier allocation mode sent by a core network device, the subcarrier allocation mode indicates the target interval of a communication device ⟋ 601

the data sending device determines a plurality of subcarriers corresponding to each communication device at the same time domain location according to the subcarrier allocation mode ⟋ 602

FIG. 6

| data sending device | | data receiving device |
|---|---|---|

Step 701, the data sending device sends a subcarrier allocation mode to the data receiving device

Step 702, the data receiving device receives the subcarrier allocation mode sent by the data sending device

Step 703, the data receiving device determines, according to the subcarrier allocation mode, that an interval between two adjacent subcarriers of a plurality of subcarriers corresponding to each communication device at the same time domain location is a target interval

FIG. 7

| data sending device | | echo receiving device |
|---|---|---|

Step 801, the data sending device sends a subcarrier allocation mode to the echo receiving device

Step 802, the echo receiving device receives the subcarrier allocation mode sent by the data sending device

Step 803, the echo receiving device determines, according to the subcarrier allocation mode, that an interval between two adjacent subcarriers of a plurality of subcarriers corresponding to each communication device at the same time domain location is a target interval

FIG. 8

Distance (m)

Speed (m/s)

FIG. 9

FIG. 10

FIG. 11

FIG. 12

FIG. 13

## INTERNATIONAL SEARCH REPORT

| International application No. |
|---|
| **PCT/CN2021/141329** |

| A. | CLASSIFICATION OF SUBJECT MATTER |
|---|---|

H04L 27/26(2006.01)i; G01S 11/02(2010.01)i

According to International Patent Classification (IPC) or to both national classification and IPC

| B. | FIELDS SEARCHED |
|---|---|

Minimum documentation searched (classification system followed by classification symbols)

H04L H04W G01S

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 子载波, 分配, 配置, 间隔, 时域, 时间, 雷达, 激光, 反射, 回波, 移动, 测距, 测速, 距离, 测量, subcarrier, allocate, configure, spacing, interval, time domain, time, radar, laser, reflection, echo, move, mobility, OFDM, ranging, speed, velocity, distance, measure

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2019245726 A1 (TELEFONAKTIEBOLAGET LM ERICSSON (PUBL)) 08 August 2019 (2019-08-08) description, paragraphs [0019]-[0034] | 1-27 |
| X | WO 2018015795 A1 (TELEFONAKTIEBOLAGET LM ERICSSON (PUBL)) 25 January 2018 (2018-01-25) description, paragraphs [0015]-[0027] | 1-27 |
| X | US 2017257865 A1 (TELEFONAKTIEBOLAGET LM ERICSSON (PUBL)) 07 September 2017 (2017-09-07) description, paragraphs [0020]-[0043] | 1-27 |
| A | CN 113093163 A (HUNAN UNIVERSITY) 09 July 2021 (2021-07-09) entire document | 1-27 |
| A | SAMSUNG. "DC subcarrier handling" *3GPP TSG RAN WG1 #88; R1-1703014*, 17 February 2017 (2017-02-17), entire document | 1-27 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 September 2022** | **21 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/141329** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111025255 A (GUILIN UNIVERSITY OF ELECTRONIC TECHNOLOGY) 17 April 2020 (2020-04-17)<br>entire document | 1-27 |
| A | CN 109061633 A (XIDIAN UNIVERSITY) 21 December 2018 (2018-12-21)<br>entire document | 1-27 |

Form PCT/ISA/210 (second sheet) (January 2015)

**INTERNATIONAL SEARCH REPORT**
Information on patent family members

International application No.

**PCT/CN2021/141329**

| Patent document cited in search report | | | Publication date (day/month/year) | Patent family member(s) | | | Publication date (day/month/year) |
|---|---|---|---|---|---|---|---|
| US | 2019245726 | A1 | 08 August 2019 | EP | 3488550 | A1 | 29 May 2019 |
| | | | | WO | 2018015793 | A1 | 25 January 2018 |
| | | | | IN | 201917003044 | A | 17 May 2019 |
| WO | 2018015795 | A1 | 25 January 2018 | CN | 109716811 | A | 03 May 2019 |
| | | | | EP | 3488628 | A1 | 29 May 2019 |
| US | 2017257865 | A1 | 07 September 2017 | WO | 2017089873 | A1 | 01 June 2017 |
| | | | | BR | 112018010629 | A2 | 27 November 2018 |
| | | | | JP | 2019503111 | A | 31 January 2019 |
| | | | | EP | 3381232 | A1 | 03 October 2018 |
| | | | | IL | 258875 | A | 28 June 2018 |
| CN | 113093163 | A | 09 July 2021 | None | | | |
| CN | 111025255 | A | 17 April 2020 | None | | | |
| CN | 109061633 | A | 21 December 2018 | None | | | |

Form PCT/ISA/210 (patent family annex) (January 2015)